# EUROPEAN PATENT APPLICATION

(11) **EP 1 538 611 A2**
(43) Date of publication of application: **08.06.2005**
(21) Application number: 04257491.3
(22) Date of filing: 02.12.2004
(51) Int. Cl.: G11B 7/085, G11B 7/08

(54) **Optical disk device and carriage feed mechanism therefor**

(30) Priority: 03.12.2003 JP 2003403905
(71) Applicant: Sony Co., Ltd., Tokyo, Tokyo 141-0001 (JP)
(72) Inventor: Ohno, Atsuomi, Shinagawa-ku Tokyo (JP)
(74) Representative: Smith, Samuel Leonard

(57) **Abstract**

An optical disk device and a carriage feed mechanism for the optical disk device are disclosed that are advantageous in reducing a load on a feed motor and realizing a reduction in a size of the motor and advantageous in a reduction in a size and a reduction in a weight. A leaf spring (28) includes a first plate portion attached to a carriage and a second plate portion that is bent from a tip of the first plate portion and faces a drive gear (2402). A gear member includes a main body of a rectangular plate shape, a driven gear (3004) that is formed to swell out in this main body and is capable of meshing with the drive gear, and a columnar shaft portion that is provided protrudingly from the main body. The driven gear meshes with the drive gear, the other surface of the main body is brought into abutment against the second plate portion, and the gear member is disposed on the second plate portion so as to be rotatable around an axis portion. The gear member is always biased in a direction, in which the driven gear meshes with the drive gear, by the leaf spring.

## Description

The present invention relates to an optical disk device and a carriage feed mechanism for the optical disk device.

An optical disk device, which records information in an optical disk such as a CD, a CD-ROM, or a DVD-ROM, reproduces recorded information, or performs recording and reproduction, generally includes: a spindle motor that is disposed on a chassis and drives to rotate an optical disk; a carriage mounted with an optical pickup; a main shaft and a counter shaft that guide the carriage in a radial direction of the optical disk; a screw shaft that is disposed on the chassis; a feed motor that drives to rotate the screw shaft; and a gear member that is disposed on the carriage, meshes with the screw shaft, and moves the carriage in the radial direction of the optical disk along the main shaft and the counter shaft according to the rotation of the screw shaft.

In recent years, the optical disk device realizes a very small light spot through a reduction in a wavelength of a semiconductor laser and an increase in NA (Numerical Aperture) of an object lens and makes it possible to perform high-density large capacity recording/reproduction.

On the other hand, in the case in which there is tilt (skew) of a lens optical axis of an optical pickup with respect to an optical disk surface, large comatic aberration occurs in proportion to the cube of NA. Consequently, installation of tilt correction means is required.

In addition, since a distance between an object lens and an optical disk surface constituting an optical pickup (working distance) is reduced due to the increase in NA, adjustment of height of the optical pickup is required in order to prevent the object lens and the optical disk from colliding with each other.

Therefore, conventionally, there has been proposed an optical disk device in which a spindle motor is disposed on a chassis, a base block is provided on the chassis to face the spindle motor, and the carriage, the main shaft, the counter shaft, the screw shaft, and the feed motor are disposed on this base block to perform adjustment of tilt and height of a lens optical axis of an optical pickup by adjusting tilt and height of the base block (see, for example, JP-A-2002-269768).

According to the conventional technique described above, since tilt and height of the base block itself, in which the carriage, the main shaft, the counter shaft, the screw shaft, the feed motor, and the like are incorporated, are adjusted, biting and disengagement of the screw shaft and the gear member do not occur. In addition, adjustment of tilt and height of the lens optical axis of the optical pickup can be performed without changing a meshing state of the screw shaft and the gear member. Therefore, the technique is advantageous in reducing a load on the feed motor and realizing a reduction in a size of the feed motor.

However, since the base block separated from the chassis is required, the technique is disadvantageous in realizing a reduction in a size and a reduction in a weight of the optical disk device.

The invention has been devised in view of the circumstances, and it is an object of the invention to provide an optical disk device and a carriage feed mechanism that are advantageous in reducing a load on a feed motor and/or realizing a reduction in a size of a motor and/or advantageous in realizing a reduction in a size and/or a reduction in a weight.

In order to attain the object, the invention is an optical disk device that performs recording and/or reproduction of information in an optical disk using an optical pickup, including: a spindle motor that is disposed on a chassis and drives to rotate an optical disk; a carriage mounted with the optical pickup; a screw shaft that is disposed on the chassis and has a drive gear formed on an outer peripheral surface thereof; a feed motor that drives to rotate the screw shaft;
a support mechanism that supports the carriage so as to be movable in a radial direction of the optical disk; an adjustment mechanism that adjusts tilt and height of the carriage with respect to a recording surface of the optical disk; and a gear member that is disposed on the carriage, has a driven gear meshing with a drive gear of the screw shaft, and moves the carriage in the radial direction of the optical disk via the support mechanism according to the rotation of the screw shaft, characterized in that the gear member is supported on the carriage so as to be rotatable around an imaginary axis substantially perpendicular to an axis of the screw shaft.

In addition, the invention is an optical disk device that drives to rotate an optical disk disposed on a chassis and moves a carriage mounted with an optical pickup in a radial direction of the optical disk on the chassis to perform recording and/or reproduction of information in the optical disk, characterized in that a carriage feed mechanism, which moves the carriage in the radial direction of the optical disk, includes: a screw shaft that is disposed on the chassis and has a drive gear formed on an outer peripheral surface thereof; a feed motor that drives to rotate the screw shaft; a support mechanism that supports the carriage so as to be movable in a radial direction of the optical disk; an adjustment mechanism that adjusts tilt and height of the carriage with respect to a recording surface of the optical disk; and a gear member that is disposed on the carriage, has a driven gear meshing with a drive gear of the screw shaft, and moves the carriage in the radial direction of the optical disk via the support mechanism according to the rotation of the screw shaft, characterized in that the gear member is supported on the carriage so as to be rotatable around an imaginary axis substantially perpendicular to an axis of the screw shaft.

In the invention, even if tilt and height of the carriage with respect to the recording surface of the optical disk are adjusted by the adjustment mechanism, the gear member rotates while a meshing state of the drive gear and the driven gear is maintained, and the meshing state of the drive gear and the driven gear does not change.

Therefore, the invention is advantageous in reducing a load on the feed motor and realizing a reduction in a size of the motor. Moreover, an optical disk device and a carriage feed mechanism for the optical disk device, which are advantageous in realizing a reduction in a size and a reduction in a weight, are obtained.

An embodiment of the invention will be described, by way of example only, with reference to the accompanying drawings in which:
Fig. 1 is a plan view of a chassis of an optical disk device;
Figs. 2A to 2C are explanatory diagrams of tilt adjustment for a main shaft;
Figs. 3A and 3B are explanatory diagrams of a gear member;
Fig. 4 is an explanatory diagram of a meshing state of the gear member and a screw shaft; and
Fig. 5 is a block diagram of the optical disk device.

The invention seeks to attain the above-mentioned objects by supporting a gear member, which meshes with a drive gear of a screw shaft and moves a carriage in a radial direction of an optical disk according to rotation of the screw shaft, on the carriage so as to be rotatable around an imaginary axis substantially perpendicular to an axis of the screw shaft.

An embodiment of the invention will be hereinafter explained with reference to the drawings.

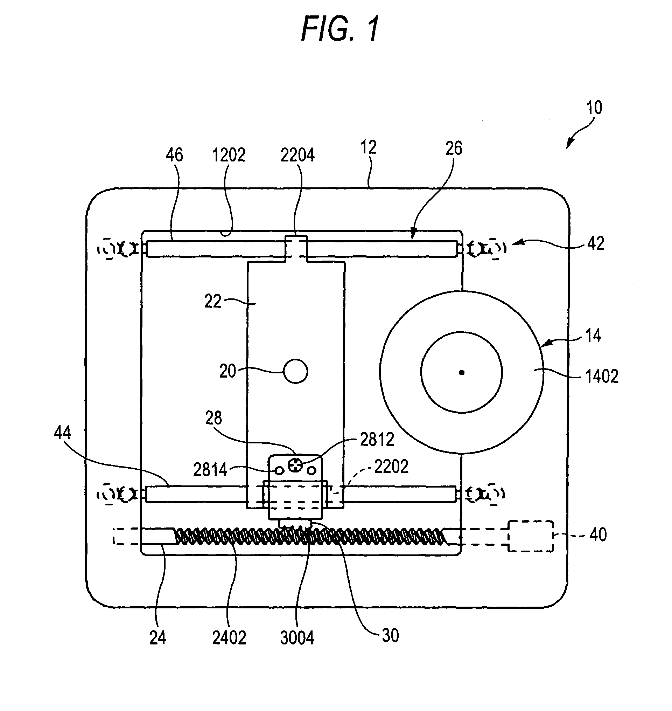

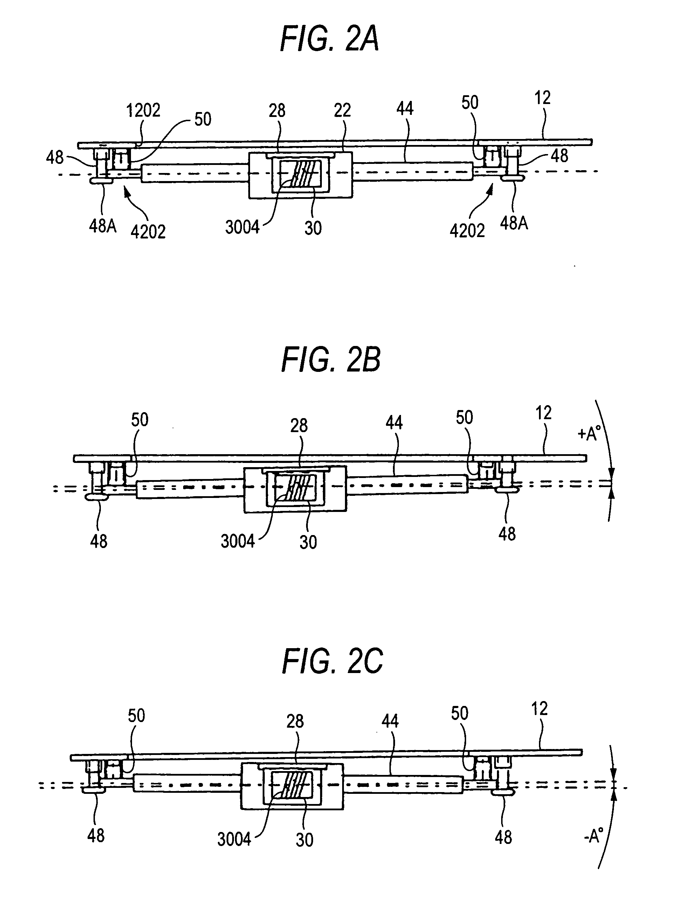

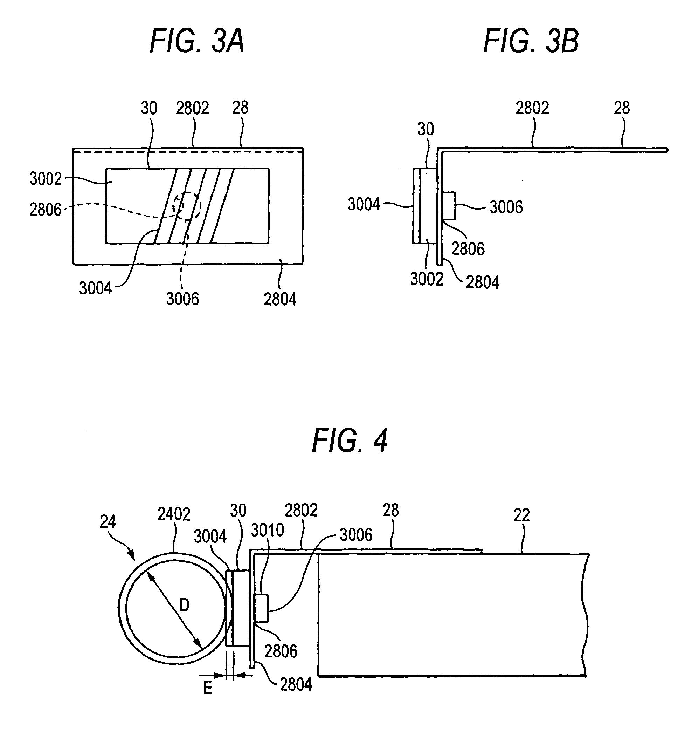

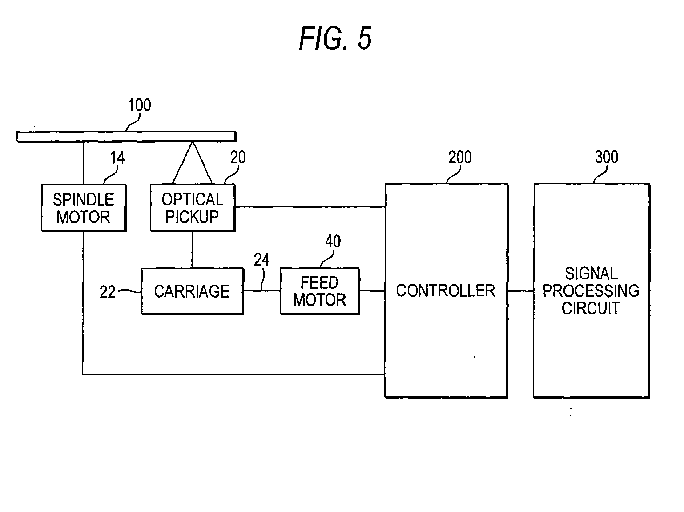

Fig. 1 shows a plan view of a chassis of an optical disk device, Figs. 2A to 2C show explanatory diagrams of tilt adjustment of a main shaft, Figs. 3A and 3B show explanatory diagrams of a gear member, Fig. 4 shows an explanatory diagram of a meshing state of the gear member and a screw shaft, and Fig. 5 shows a block diagram of the optical disk device.

An optical disk device 10, which records/reproduces information in an optical disk, includes a chassis 12 disposed in the inside of a not-shown case.

As shown in Fig. 1, a rectangular opening 1202 is formed in the center of the chassis 12, and a spindle motor 14 is attached in one side portion constituting an edge of the opening 1202. In the figure, reference numeral 1402 denotes a turntable that is located on an upper surface of the chassis 12 and driven to rotate by the spindle motor 14. An optical disk is mounted on the turntable 1402 such that a recording surface thereof faces the opening 1202.

As shown in Fig. 1, a carriage 22 mounted with an optical pickup 20, a screw shaft 24, and a support mechanism 26 for the carriage 22 are provided so as to face the opening 1202 on a lower surface of the chassis 12, a leaf spring 28 is attached to the carriage 22, and a gear member 30 is attached to the leaf spring 28. The carriage 22 is moved in a radial direction of the optical disk via the support mechanism 26 and the gear member 30 according to rotation of the screw shaft 24.

In addition, a feed motor 40, which drives to rotate the screw shaft 24, and an adjustment mechanism 42, which adjusts tilt and height of the carriage 22 with respect to the recording surface of the optical disk, are provided on a lower surface of the chassis 12 on the outside of the opening 1202.

In this embodiment, a carriage feedmechanism, which moves the carriage 22 mounted with the optical pickup 20 in the radial direction of the optical disk, includes the screw shaft 24, the support mechanism 26, the leaf spring 28, the gear member 30, the feed motor 40, and the adjustment mechanism 42 and the like.

The optical pickup 20 is disposed in the center on an upper surface of the carriage 22, a bearing hole 2202 is formed on one side of the carriage 22, and a C-shaped engaging portion 2204 opened on an outer side is formed on the other side of the carriage 22.

In this embodiment, the support mechanism 26 includes a main shaft 44 and a counter shaft 46 that are supported by the chassis 12 at an interval in a direction perpendicular to a direction, in which the carriage 22 is moved, and extend in a direction parallel to the moving direction of the carriage 22. The main shaft 44 is inserted slidably through the bearing hole 2202 of the carriage 22, and the counter shaft 46 is inserted through the engaging portion 2204 of the carriage 22.

Both ends of the main shaft 44 and the counter shaft 46 are supported movably only in a thickness direction (vertical direction) of the chassis 12 by a not-shown guiding mechanism, respectively. As shown in Fig. 2, those ends are placed on heads 48A of male screws 48 that threadedly engage with female screws of the chassis 12.

In addition, compression springs 50 are disposed between both the ends of the main shaft 44 and the counter shaft 46 and the lower surface of the chassis 12, and both the ends of the main shaft 44 and the counter shaft 46 are always in abutment against the heads 48A of the male screws 48 by these compression springs 50.

In this embodiment, plural adjustment portions 4202, which adjust positions of both the ends of the main shaft 44 and the counter shaft 46 with respect to the recording surface of the optical disk, are constituted by the male screws 48 and the compression springs 50. The adjustment mechanism 42 is constituted by these plural adjustment portions 4202.

When the male screws 48 at both the ends of the main shaft 44 are rotated, tilt of the main shaft 44 changes and radial skew is adjusted. When the male screws 48 at both the ends of the counter shaft 46 are rotated, tilt of the counter shaft 46 changes and tangential skew is adjusted. When all the male screws 48 in the four positions are rotated by an identical amount, height of the carriage 22 with respect to the recording surface of the optical disk is adjusted, andheight of the optical pickup 20 is adjusted.

Note that Fig. 2B shows a state in which tilt of the main shaft 44 is adjusted by +A degrees from a state of Fig. 2A. Fig. 2C shows a state in which tilt of the main shaft 44 is adjusted by -A degrees from the state of Fig. 2A.

The screw shaft 24 is provided near the main shaft 44 to extend in parallel with the main shaft 44, and a drive gear 2402 is formed on an outer peripheral surface of the screw shaft 24.

The feed motor 40 is disposed to be directly connected to one end of the screw shaft 24, and the other end of the screw shaft 24 is supported rotatably by a not-shown bearing portion of the chassis 12.

The leaf spring 28 is formed of a spring steel plate and disposed on a side of the carriage 22 facing the screw shaft 24.

As shown in Fig. 3A as a front view and in Fig. 3B as a side view, the leaf spring 28 includes a first plate portion 2802, a base of which is attached to the upper surface of the carriage 22 and a tip of which extends toward the screw shaft 24, and a second plate portion 2804, which is formed to bend at a right angle from the tip of the first plate portion 2802 and faces the drive gear 2402. A hole 2806 is provided through the center of the second plate portion 2804. Note that, in Fig. 1, reference numeral 2812 denotes a screw that attaches the first plate portion 2802 to the upper surface of the carriage 22, and reference numeral 2814 denotes a baffle pin.

The gear member 30 includes a main body 3002 of a rectangular plate shape, a driven gear 3004 that is formed to swell out on one surface of this main body 3002 and is capable of meshing with the drive gear 2402, and a columnar shaft portion 3006 that is protrudingly provided from the other surface of the main body 3002.

As shown in Figs. 1 and 4, the driven gear 3004 meshes with the drive gear 2402, the other surface of the main body 3002 is brought into abutment against the second plate portion 2804, and the shaft portion 3006 is inserted through the hole 2806 and an end thereof is melted by heat to be formed as a swelled portion 3010 having a diameter larger than an inner diameter of the hole 2806, whereby the gear member 30 is disposed on the second plate portion 2804 to be rotatable around the hole 2806 and the shaft portion 3006. Consequently, the gear member 30 is supported on the carriage 22 to be rotatable around an imaginary axis substantially perpendicular to the axis of the screw shaft 24 (or around an imaginary axis substantially perpendicular to a longitudinal direction of the screw shaft 24) .

Moreover, the gearmember 3 0 is always biased in a direction, in which the driven gear 3004 meshes with the drive gear 2402, by, in particular, the second plate portion 2804 of the leaf spring 28. In this embodiment, biasing means, which biases the gear member 30 in the direction in which the driven gear 3004 meshes with the drive gear 2402, is constituted by the leaf spring 28.

In this embodiment, the carriage 22 moves in the radial direction of the optical disk by rotation drive of the feed motor 40, a light beam is irradiated on the optical disk such as a CD, a CD-ROM, or a DVD-ROM from the optical pickup 20, and information is recorded in the optical disk or recorded information is reproduced, or recording and reproduction is performed.

More specifically, as shown in Fig. 5, the optical disk device 10 includes a controller 200 and a signal processing circuit 300 in addition to the spindle motor 14, the optical pickup 20, the feed motor 40, and the like.

The controller 200 is constituted to perform rotation control for the spindle motor 14 and the feed motor 40, servo control for a focusing direction and a tracking direction of the optical pickup 20, output control for a light beam of the optical pickup 20, decodingprocessing for a reproduction signal, and the like.

The signal processing circuit 300 is constituted to perform reproduction of information recorded in an optical disk 100 on the basis of the reproduction signal andperform recording of information, which is inputted from the outside, in the optical disk 100 via a controller 106.

Next, actions and advantages will be explained.

When the male screws 48 at both the ends of the main shaft 44 are rotated, radial skew is adjusted, when the male screws 48 at both the ends of the counter shaft 46 are rotated, tangential skew is adjusted, and when all the male screws 48 in the four positions are rotated by an identical amount, height of the optical pickup 20 is adjusted.

Then, tilt of the carriage 22 changes at the time of adjustment of radial skew and, when it is assumed that the gear member 30 is fixed to the carriage 22, a meshing state of the drive gear 2402 and the driven gear 3004 changes, and biting and disengagement of these gears 2402 and 3004 occur. However, in this embodiment, the gear member 30 is supported so as to be rotatable around an imaginary axis perpendicular to the axis of the screw shaft 24 via the hole 2806 and the shaft portion 3006. Thus, even if tilt of the carriage 22 is adjusted, the gear member 30 rotates while a meshing state of the drive gear 2402 and the driven gear 3004 is maintained, and the meshing state of the drive gear 2402 and the driven gear 3004 does not change.

In this embodiment, as shown in Fig. 4, a diameter D of a bottom of the drive gear 2402 of the screw shaft 24 is about 2 mm, and a depth E at which the drive gear 2402 and the driven gear 3004 mesh with each other is 0.25 mm. Despite the fact that the drive gear 2402 and the driven gear 3004 have only the very small meshing depth E, smooth meshing of the drive gear 2402 and the driven gear 3004 is guaranteed.

Therefore, even if the main shaft 44 is tilted to adjust radial skew, a meshing state of the drive gear 2402 and the driven gear 3004 does not change. Consequently, biting and disengagement of gears are prevented, and it is possible to move the carriage 22 smoothly in the radial direction of optical disk using the feed motor 40 without causing large torque fluctuation.

This also makes it possible to move the carriage 22 at high speed between a retracted position apart from the optical disk and a recording and reproduction position facing the bottom of the recording surface of the optical disk. This is advantageous in improving operabilityof the optical disk device 10.

Since it is possible to maintain a meshing state of the drive gear 2402 and the driven gear 3004 in a uniform state, fluctuation in a load applied to the feed motor 40 can be controlled to be minimum, and a load applied to the feed motor 40 canbe reduced. This is advantageous in realizing a reduction is a size of the feed motor 40.

Since it is possible to attain the above-mentioned advantages with the simple structure in which the gear member 30 is rotatably supported on the carriage 22. This is advantageous in realizing a reduction in the number of components and a reduction in a size of the optical disk device 10.

In addition, in this embodiment, the driven gear 3004 is always biased in the direction, in which the driven gear 3004 meshes with the drive gear 2402, by the leaf spring 28. This is advantageous in preventing disengagement of the driven gear 3004 and the drive gear 2402.

Note that, in the case in which the driven gear 3004 is biased in the direction in which the driven gear 3004 meshes with the drive gear 2402, for example, it is also possible that a block is provided on a side of the carriage 22 in a direction in which the block separates from and approaches the drive gear 2402 of the screw shaft 24, the gear member 30 is rotatably attached to this block, and this block is biased in the direction of drive gear 2402 by a coil spring or the like. However, it is advantageous in realizing a reduction in the number of components and a reduction in a weight if the leaf spring 28 is used as in the embodiment.

In addition, it is possible to use various mechanisms, which are publicly known conventionally, as the support mechanism 26 that supports the carriage 22 so as to be movable in the radial direction of the optical disk and the adjustment mechanism 42 that adjusts tilt and height of the carriage 22 with respect to the recording surface of the optical disk. The support mechanism 26 and the adjustment mechanism 42 are not limited to the constitution of the embodiment.

## Claims

1. An optical disk device that performs recording and/or reproduction of information in an optical disk using an optical pickup, comprising:
a spindle motor that is disposed on a chassis and drives to rotate an optical disk;
a carriage mounted with the optical pickup;
a screw shaft that is disposed on the chassis and has a drive gear formed on an outer peripheral surface thereof;
a feed motor that drives to rotate the screw shaft;
a support mechanism that supports the carriage so as to be movable in a radial direction of the optical disk;
an adjustment mechanism that adjusts tilt and height of the carriage with respect to a recording surface of the optical disk; and
a gear member that is disposed on the carriage, has a driven gear meshing with a drive gear of the screw shaft, and moves the carriage in the radial direction of the optical disk via the support mechanism according to the rotation of the screw shaft, wherein
the gear member is supported on the carriage so as to be rotatable around an imaginary axis substantially perpendicular to an axis of the screw shaft.

2. An optical disk device according to claim 1, wherein biasing means, which biases the gear member in a direction in which the driven gear meshes with the drive gear, is provided in the carriage.

3. An optical disk device according to claim 2, wherein a leaf spring consisting of a spring steel plate is attached to the carriage, the leaf spring includes a first plate portion, a base of which is attached to the carriage and a tip of which extends toward the screw shaft, and a second plate portion, which is bent from the tip of the first plate portion and faces the drive gear, the gear member is supported on the second plate portion so as to be rotatable around an imaginary axis perpendicular to an axis of the screw shaft, and the biasing means is constituted by the leaf spring.

4. An optical disk device according to claim 3, wherein the gear member has a columnar boss portion that projects from a rear of the driven gear, and the boss portion is rotatably supported on the second plate portion.

5. An optical disk device according to any of the preceding claims, wherein the support mechanism includes a main shaft and a counter shaft that are supported by the chassis at an interval in a direction perpendicular to a direction in which the carriage is moved and extend in a direction parallel to the moving direction of the carriage, the main shaft is inserted slidably through a bearing hole provided in the carriage, and the counter shaft is inserted through a C-shaped engaging portion provided in the carriage.

6. An optical disk device according to claim 5, wherein the main shaft is disposed near the screw shaft, and the counter shaft is disposed in a position apart from the screw shaft.

7. An optical disk device according to claim 5 or 6, wherein the adjustment mechanism is constituted by plural adjustment portions that are provided at both ends in a longitudinal direction of the main shaft and both ends in a longitudinal direction of the counter shaft, respectively, and adjust positions of both the ends with respect to the recording surface of the optical disk.

8. A carriage feed mechanism for an optical disk device that drives to rotate an optical disk disposed on a chassis and moves the carriage mounted with an optical pickup in a radial direction of the optical disk on the chassis to perform recording and/or reproduction of information in the optical disk, wherein
said carriage feed mechanism, which moves the carriage in the radial direction of the optical disk, comprises:
a screw shaft that is disposed on the chassis and has a drive gear formed on an outer peripheral surface thereof;
a feed motor that drives to rotate the screw shaft;
a support mechanism that supports the carriage so as to be movable in a radial direction of the optical disk;
an adjustment mechanism that adjusts tilt and height of the carriage with respect to a recording surface of the optical disk; and
a gear member that is disposed on the carriage, has a driven gear meshing with a drive gear of the screw shaft, and moves the carriage in the radial direction of the optical disk via the support mechanism according to the rotation of the screw shaft, wherein the gear member is supported on the carriage so as to be rotatable around an imaginary axis substantially perpendicular to an axis of the screw shaft.

9. A carriage feed mechanism for an optical disk device according to claim 8, wherein biasing means, which biases the gear member in a direction in which the driven gear meshes with the drive gear, is provided in the carriage.

10. A carriage feed mechanism for an optical disk device according to claim 9, wherein a leaf spring consisting of a spring steel plate is attached to the carriage, the leaf spring includes a first plate portion, a base of which is attached to the carriage and a tip of which extends toward the screw shaft, and a second plate portion, which is bent from the tip of the first plate portion and faces the drive gear, the gear member is supported on the second plate portion so as to be rotatable around an imaginary axis perpendicular to an axis of the screw shaft, and the biasing means is constituted by the leaf spring.

11. A carriage feed mechanism for an optical disk device according to claim 10, wherein the gear member has a columnar boss portion that projects from a rear of the driven gear, and the boss portion is rotatably supported on the second plate portion.
